# EUROPÄISCHE PATENTSCHRIFT

(11) **EP 0 917 631 B1**
(45) Veröffentlichungstag und Bekanntmachung des Hinweises auf die Patenterteilung: **14.11.2001**
(21) Anmeldenummer: 98936182.9
(22) Anmeldetag: 17.06.1998
(51) Int. Cl.: F16F 1/38, F16F 1/373, F16F 1/44

(54) **EINKNÜPFLAGER**
FASTENING SUPPORT
SUPPORT ANTIVIBRATOIRE

(30) Priorität: 17.06.1997 DE 29710578 U
(43) Veröffentlichungstag der Anmeldung: 26.05.1999
(73) Patentinhaber: WOCO Franz-Josef Wolf & Co., 63628 Bad Soden-Salmünster (DE)
(72) Erfinder: WOLF, Franz, Josef, D-63628 Bad Soden-Salmünster (DE); BEZI, Laszlo, H-1205 Budapest (HU); SCHMIDT, Ferenc, H-1021 Budapest (HU); KLÜH, Alfred, D-36381 Schlüchtern (DE)
(74) Vertreter: Jaeger, Klaus, Dipl.-Chem. Dr.
(86) Internationale Anmeldenummer: DE9801637
(87) Internationale Veröffentlichungsnummer: WO9858190

(56) Entgegenhaltungen:
- WO-A-98/13623
- DE-U- 1 800 990
- US-A- 3 756 551
- US-A- 4 530 491
- US-A- 5 580 028
- US-A- 5 601 304
- US-A- 5 743 509

## Beschreibung

Die Erfindung betrifft ein rotationssymetrisches Einknüpflager mit einem einteiligen Elastomerfederelement, einem ersten Anschlußelement, nämlich einem Anschlußflansch mit einer Einknüpföffnung, in die das Elastomerfederelement eingeknüpft und auf dessen Randflächenbereich es abgestützt ist, sowie mit einem zweiten, in der Regel scheibenförmigen Anschlußelement, das am Elastomerfederelement, zumeist zu beiden Seiten des Anschlußflansches, angeschlossen und in diesem Falle mit einer Hülse und in dieser mit einem Schraubbolzen durchsetzt und mit außenliegenden Schraubmuttern fixiert ist.

Einknüpflager dieser Art werden zur Lagerung von Maschinen unterschiedlichster Art, im Kraftfahrzeugbau insbesondere zur Lagerung von Antriebsaggregaten benutzt.

Im Gegensatz zu einem aufwendigeren, mehrteilig zusammengebauten Lager, das unter einer meist ringförmigen Tragfeder und unter einem Zwischenträger mit einem angekoppelten separaten Dämpfer ausgerüstet ist, besteht ein Einknüpflager typischerweise aus einem einstückig ausgebildeten Elastomerfederelement und zwei Anschlußelementen, nämlich einem ersten Anschlußelement als Widerlageranschluß und einem zweiten Anschlußelement als Auflageranschluß für den Auflastanschluß . Das Elastomerfederelement ist üblicherweise als Rotationskörper mit in der Radialebene liegenden Stirnflächen ausgebildet. Mehr oder minder mittig zwischen den beiden Stirnflächen ist eine Ringnut ausgebildet, in die nach dem Einknüpfen des Elastomerfederelementes in einer Einknüpföffnung, die in dem ersten Anschlußelement ausgebildet ist, der Innenrand der Einknüpföffnung des Anschlußelementes bündig, gegebenenfalls unter geringer Vorspannung, eingreift. In der Regel ist das Federelement mit einer durchgehenden zentralen Bohrung und in dieser mit einer zentralen Hülse ausgestattet, durch die ein Schraubbolzen hindurchgreift. Dabei ist die Hülse axial kürzer als das entspannte Federelement, während der Schraubbolzen länger als die Hülse ist und auch bereits aus dem entspannten Federelement herausragen kann. Auf zumindest einer, in der Regel auf den beiden einander gegenüberliegenden Stirnflächen des Elastomerfederkörpers sind Lastaufnahmestücke, meist Stahlscheiben, angeordnet. Dabei kann das Elastomer sowohl als Gummi-Metall-Verbindung mit den Anschlußstücken fest verbunden sein als auch die Anschlußstücke unter Führung durch den zentralen Schraubbolzen lose auf den Stirnseitenflächen des Elastomerfederelementes aufliegen. Durch einseitiges und beidseitiges Aufschrauben von Schraubmuttern auf den Schraubbolzen können die stirnseitigen Anschlußelemente fest auf den stirnseitigen Rand der zentralen Hülse aufgepresst werden. Dadurch wird das Elastomerfederelement des Einknüpflagers unter Vorspannung gesetzt.

Der jeweils benötigte Grad der Vorspannung ist dabei als Funktion der axialen Länge der Hülse beliebig vorwählbar. Einknüpfseitig ist das in den verschiedensten Ausgestaltungen aus dem Stand der Technik bekannte Elastomerfederelement für Einknüpflager der hier in Rede stehenden Art so konfiguriert, daß ein Durchdrücken, nämlich das "Einknüpfen", des Elastomerfederelementes durch die Öffnung des ersten Anschlußelementes, die in dem meist als Träger, Zunge oder Flansch ausgebildet ist, mit insgesamt möglichst geringer Verformung des Elastomerfederelementes erfolgen kann. Zu diesem Zweck ist das Elastomerfederelement an seinem einzuknüpfenden axialen Ende typischerweise noch einmal glockenförmig oder kegelstumpfförmig verjüngt.

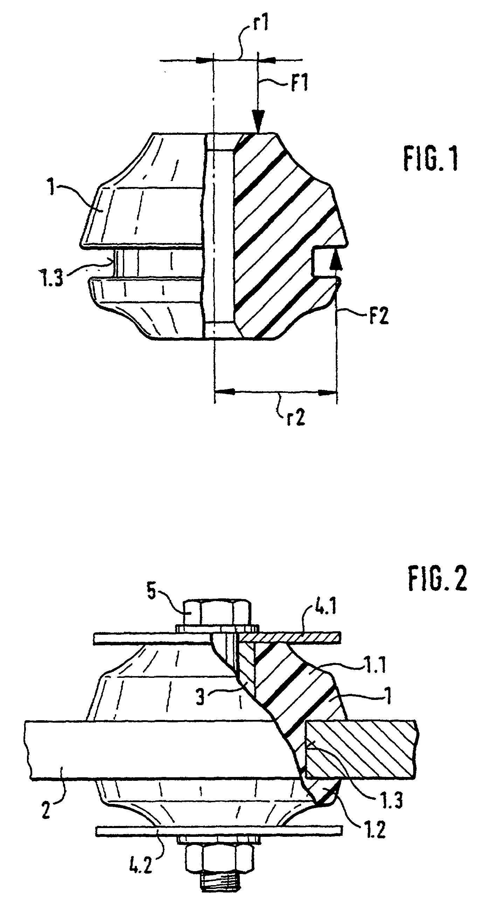

Ein solches für den landläufigen Stand der Technik typisches Elastomerfederelement ist in der Fig. 1 gezeigt, während ein unter Verwendung des in Fig. 1 gezeigten Elastomerfederkörpers hergestelltes Einknüpflager im Zusammenbau und im vorgespannten, aber unbelasteten Zustand in Fig. 2 gezeigt ist. Dabei bezeichnen die Bezugszeichen 1 den Elastomerfederkörper und 1.1 den bei Auflast auf dem Anschlußstück 4.1 als Puffer wirkenden Abschnitt des Elastomerfederkörpers. Bei Angriff einer Zuglast am Anschlußteil 4.1 wird nach Umleitung der angreifenden Kraft über die Zentralhülse 3 und das auf der anderen Stirnseite des Elastomerfederelements gegenüberliegende Anschlußelement 4.2 der Abschnitt 1.2 des Elastomerfederelements 1 ebenfalls auf Druck belastet und wirkt als Puffer zur Aufnahme der angreifenden Zugkraft. Die Ankopplung erfolgt über einen Schraubbolzen 5. Dabei dient das Anschlußelement 2 als Widerlager für die in das Elastomerfederelement eingeleiteten Druck und Schubkräfte. Außerdem wird über den zylinderförmigen Elastomerabschnitt 1.3 zwischen der zentralen Hülse 3 und dem Rand der Öffnung im Anschlußelement 2 eine Radialführung des bekannten Einknüpflagers bewirkt.

Nachteil der vorstehend beschriebenen und in zahllosen Varianten seit vielen Jahrzehnten gebräuchlichen Form eines Einknüpflagers ist, daß die Geometrie des Elastomerfederkörpers auf eine günstige Einknüpfbarkeit und eine größtmögliche Schonung des Elastomers während des Einknüpfens ausgelegt ist. Eine solche Konfiguration geht jedoch zu Lasten der Einsatz-Standzeit solcherart aufgebauter und typischerweise dynamisch belasteter Einknüpflager, da die über die Anschlußelemente 4.1 und 4.2 einerseits und das als Widerlager dienende Anschlußelement 2 andererseits in das Elastomerfederelement eingeleiteten Kräfte bezogen auf die Radialebene des Elastomerfederelementes, auf ungleichen Radien angreifen. Dadurch entstehen in den Pufferabschnitten 1.1 und 1.2 des Elastomerfederelements 1 beachtliche Scherspannungen, die zu einer Verkürzung der Standzeit der Lager Anlaß geben. Bekanntlich weisen Puffer mit ausschließlicher Druckbelastung auch bei dynamischer Belastung eine mitunter um eine Größenordnung höhere Belastbarkeit auf als ein identisches Elastomerfederelement unter Schublast oder unter Scherlast. Diesen Konflikt hat die Praxis bislang dadurch zu lösen versucht, daß Gummiqualitäten mit ausgeprägten guten Festigkeitswerten eingesetzt werden. Neuerdings wird jedoch insbesondere zur Aggregatlagerung im Kraftfahrzeugbau von Einknüpflagern der hier in Rede stehenden Art auch eine zunehmend höhere Temperaturbeständigkeit gefordert, für die zwar durchaus Elastomerqualitäten zur Verfügung stehen, jedoch nur solche, die eine deutlich geringere dynamische Belastbarkeit aufweisen als die bislang zur Herstellung von Einknüpflagern verwendeten Elastomerqualitäten. Demgegenüber fehlt aber den bislang verwendeten Gummiqualitäten die von den Kraftfahrzeugherstellern geforderte höhere Temperaturbeständigkeit.

Ausgehend von diesem Stand der Technik liegt der Erfindung das technische Problem zugrunde, ein Einknüpflager der eingangs beschriebenen Art dahingehend zu verbessern, daß das Elastomerfederelement längere Standzeiten, insbesondere unter dynamischer Belastung, aufweist, so daß auch mit mechanisch weniger festen, dafür aber temperaturbeständigeren Elastomerqualitäten auch unter dynamischer Belastung Betriebsstandzeiten erzielbar sind, die den bislang erzielbaren Standzeiten zumindest entsprechen, wenn nicht gar besser als diese sind.

Zur Lösung dieses Problems schafft die Erfindung ein Einknüpflager, das die im Anspruch 1 genannten Merkmale aufweist.

Der Kerngedanke der Erfindung, der den Weg zu den angestrebten Verbesserungen öffnet, liegt demnach darin, bei der Konfiguration eines einstückigen Elastomerfederelementes für ein Einknüpflager nicht nur auf eine leichte Einknüpfbarkeit des Elastomerfederelementes in der Anschlußöse zu achten, sondern zumindest auch gleichrangig durch das Mittel der Konfigurationsgestaltung für den Elastomerfederblock das Auftreten der verschiedenen Spannungen, deren Verteilung und deren Verlauf im Elastomerfederblock unter Vorspannung und unter Last von vornherein so zu beeinflussen und zu verändern, daß vor allem praktisch keine Scherspannungen und kaum Schubspannungen im Elastomerfederelement auftreten. Dabei können im Vergleich zu dem in den Figuren 1 und 2 gezeigten Einknüpflager nach dem Stand der Technik bei Verwendung identischer Elastomermischungen mit den Einknüpflagern gemäß der Erfindung die Standzeiten im Test unter dynamischer Dauerbelastung um den Faktor 10 bis 20 verbessert werden. Dies wiederum ermöglicht, wo von der Anwendung gefordert, auch den Einsatz von Elastomeren, beispielsweise von EPDM, die zwar mechanisch empfindlicher als viele andere Elastomermischungen, dafür aber wesentlich temperaturbeständiger sind. Im Ergebnis können durch die Erfindung also auch Einknüpflager hergestellt werden, die bei zumindest gleicher dynamischer Standzeit, ggf. einer mäßig verbesserten dynamischen Standzeit diese Standzeiten bei wesentlich höheren zulässigen Betriebstemperaturen erbringen. Dies ist insbesondere im Kraftfahrzeugbau, speziell im Personenkraftfahrzeugbau vorteilhaft, wo Einknüpflager häufig zur Lagerung von Antriebsaggregaten eingesetzt werden und wo durch die gestiegenen Leistungsanforderungen an die Motoren auch die im Motorraum auftretenden Betriebstemperaturen im Verlauf der Entwicklung in den letzten Jahren immer wieder angestiegen sind.

Das Grundkonzept zur konstruktiven Verwirklichung dieser Erkenntnisse geht dabei davon aus, die Kraftübertragungsflächen, über die Auflastkräfte und Widerlagerkräfte in das einteilige Elastomerfederelement eingeleitet werden, auf gleiche Radien zu legen, bezogen auf die zur Rotationsachse des Elastomerfederelementes achsparallele Richtung des Auflastvektors. Dies wird primär durch eine entsprechende geometrische Konfiguration des einteiligen Elastomerfederelementes und in zweiter Linie durch eine entsprechende Konfiguration der Einknüpföffnung verwirklicht, durch die hindurch das Elastomerfederelement einknüpfend gedrückt wird.

Im Vergleich zu dem eingangs erörterten Stand der Technik führt dies im Ergebnis zu der technischen Lehre, die Krafteinleitungsradien der stirnseitigen kreisringförmigen Kraftflußflächen der einstückigen Elastomer-Einknüpfkörper zu vergrößern und die Krafteinleitungsradien der flanschseitigen Widerlagerflächen zu verkleinern, und dabei gleichzeitig auch den wirksamen Flächeninhalt der Kraftflußflächen, insbesondere der Widerlagerflächen, zu vergrößern.

Besonders gute Kenndaten werden für ein solcherart einstückig einknüpfbares Lager in seinem Gesamtverhalten dann erhalten, wenn die axiale Tragfunktion und die radiale Stabilisierung des Lagers auf voneinander entkoppelte Bereiche des Elastomerfederblockes des Lagers übertragen werden. Gemäß einem bevorzugten Ausführungsbeispiel der Erfindung wird dieses dadurch erreicht, daß der radial innenliegende und an der Hülse des Lagers außen anliegende zylindrische Bereich des Elastomerfederblockes durch eine oder mehrere Kehlungen oder durch mindestens eine zylindermantelförmige und koaxial zur Lagerachse ausgerichtete Ringnut vom Druckspannungszylinder und durch eine axiale Verkürzung von zumindest dem Auflageranschlußelement beabstandet ist.

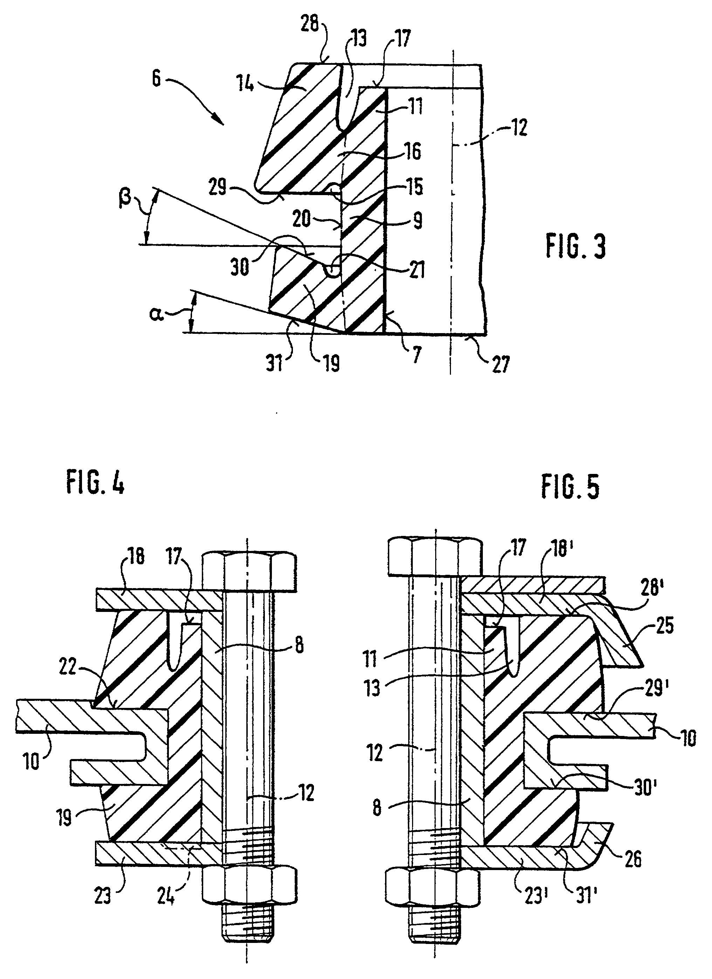

Diese Entkopplung der axialen und der radialen Funktionen im Lagerelastomerkörper wird auch dadurch unterstützt und verbessert, daß die einknüpfseitige Stirnseite des Elastomerblocks als schirmartige oder pilzhutartige Ringmanschette ausgebildet ist, die sich zur Auflagerseite hin öffnet. Dabei ist, jeweils bezogen auf die Radialebene des rotationssymmetrischen einstückigen Elastomerfederkörpers, der äußere Kegelöffnungswinkel α (Fig. 3) vorzugsweise kleiner als der innere Kegelöffnungswinkel β (Fig. 3), so daß also die axiale Dicke der Ringmanschette radial außen größer als radial innen ist. Dies führt dazu, daß die axiale Belastung der Ringmanschette im zusammengebauten und belasteten Lager ganz überwiegend radial außen erfolgt und der radial innenliegende hülsennahe zylinderringförmige Abschnitt des Elastomerfederkörpers, der der radialen Stabilisierung des Lagers dient, praktisch schubspannungsfrei entkoppelt, also schwingungsisoliert ist von den Bereichen des Elastomerfederkörpers, die die axialen Druckkräfte aufnehmen.

Dabei kann die schubspannungsfreie Abkopplung der Radialstabilisierungsabschnitte des Elastomereinknüpfkörpers von den die axial gerichteten Druckspannungen aufnehmenden Bereichen des Elastomerkörpers dadurch weiter verbessert werden, daß radial unmittelbar an die Außenwand der Lagerhülse angrenzend in der zur Auflastseite weisenden Oberfläche der der Auflastseite gegenüberliegenden Elastomerkörperabstützung eine ringförmige Vertiefung ausgebildet ist, die zur Aufnahme ggf. im Radialstützbereich des Elastomerkörpers auftretende Verformungen aufnehmen kann.

Zur Steuerung der Verformungen des Elastomerkörpers in den die axialen Spannungen aufnehmenden Federbereichen sind bedarfsweise einzelne oder alle Anschlußelemente, die mit dem Elastomerfederkörper kraftflußschlüssig in Verbindung stehen durch zargenartige Ränder oder flache Ausdrehungen so zu konfigurieren, daß beispielsweise Bombierungen zugelassen oder durch eine Rücklenkung des Spannungsverlaufs kontrolliert vermindert werden können. Eine solche Anordnung ermöglicht eine sehr genaue und feine Abstimmung der Lagerkenndaten.

Im Bereich der kreisförmigen, in der Radialebene liegenden Schnittlinien zwischen den verschiedenen axialen und radialen Flächen, die den Aufnahmebereich für die zylindrische Innenwand des Widerlageranschlußelementes bilden, sind vorzugsweise Ringkehlen oder tiefere Ringnuten, letztere mit axialer Erstreckung, ausgebildet, um vor allem beim Einknüpfen die insbesondere im Bereich dieser Schnittlinien auftretenden hohen Spitzenspannungen zu vermeiden. Dabei ist die axiale Höhe des ringnutartigen Ausschnittes aus dem Elastomerfederkörper zur Aufnahme des Einknüpfflansches vorzugsweise so bemessen, daß diese Höhe gleich oder nur geringfügig kleiner als die axiale Höhe der Einknüpföffnung ist.

Die Erfindung ist im folgenden ebenso wie der Stand der Technik anhand von Beispielen in Verbindung mit den Zeichnungen näher erläutert. Es zeigen:
- Fig. 1: teils in Seitensicht, teils im Axialschnitt einen Elastomerfederkörper eines Einknüpflagers nach dem Stand der Technik im entspannten Zustand;
- Fig. 2: in Seitensicht und teilweise im Axialschnitt ein Einknüpflager nach dem Stand der Technit mit einem Elastomerfederkörper wie er in Fig. 1 gezeigt ist, wobei das Lager im vorgespannten aber unbelasteten Zustand dargestellt ist;
- Fig. 3: im Axialschnitt einen Elastomerfederkörper im entspannten Zustand zur Verwendung in einem Einknüpflager gemäß der Erfindung;
- Fig. 4: im Axialschnitt ein erstes Beispiel eines Einknüpflagers gemäß der Erfindung mit einem Elastomerfederkörper gemäß Fig. 3; und
- Fig. 5: ein zweites Beispiel für ein Einknüpflager gemäß der Erfindung, ebenfalls mit einem Elastomerfederkörper gemäß Fig. 3, ebenfalls im Axialschnitt sowie im zwar vorgespannten, aber unbelasteten Zustand.

Das in den Figuren 1 und 2 gezeigte Einknüpflager nach dem Stand der Technik ist bereits eingangs kurz erläutert. Dabei lassen die Darstellungen der Figuren 1 und 2 deutlich erkennen, daß die Auflastkraft F1 auf einer Ringfläche mit dem mittleren Radius r1 in den Elastomerfederkörper eingeleitet und von einer über das Widerlager eingeleiteten Kraft F2 auf einer Kreisringfläche abgestützt ist, deren mittlerer Radius r2 wesentlich größer als der Einleitungsradius r1 ist. Diese Radiusdifferenz führt zu den eingangs erläuterten Scherspannungen und Schubspannungskomponenten im Elastomerfederkörper, die für die Herabsetzung der Standzeit solcher Einknüpflager verantwortlich sind.

Die Figuren 1 und 2 lassen weiterhin deutlich erkennen, daß die Radialstabilisierung des Elastomerfederelementes nach dem Stand der Technik über den Einknüpfflansch 2 und die zylindrische Aufnahmefläche 1.3 des Elastomerfederelementes zu Querspannungen im Elastomerblock führen, die unmittelbar in den axialen Spannungsverlauf des belasteten Einknüpflagers einfließen und so Scherspannungskomponenten erzeugen, die ihrererseits zu einer weiteren Verminderung der Standzeit des Lagers führen.

Diese Scherspannungsquellen und Schubspannungsquellen sind bei einem Einknüpflager gemäß der Erfindung nahezu vollständig ausgeschaltet, wodurch die eingangs erörterte Verwendung auch mechanisch weniger fester Elastomerwerkstoffe ermöglicht wird.

In der Fig. 3 ist im Axialschnitt ein einteiliger rotationssymmetrischer Elastomerfederkörper 6 im spannungsfreien Zustand gezeigt, wie er in einem Einknüpflager gemäß der Erfindung Verwendung findet. Der im wesentlichen zylindrische Elastomerfederkörper weist eine zentralaxiale durchgehende Bohrung 7 zur Aufnahme einer ebenfalls zylindrischen Lagerhülse 8 (Fig. 4) auf. Um die Bohrung 7 herum ist ein im wesentlichen zylinderringförmiger Abschnitt 9 ausgebildet (Fig. 3), der Teil des Elastomerfederkörpers ist und in Verbindung mit der Hülse 8 und einem in der Regel als Widerlager dienenden Einknüpfflansch 10 der Radialführung des Einknüpflagers dient. Dieser zylinderringförmige Abschnitt 9 des Elastomerfederkörpers 6, der im folgenden kurz als "Radialführung" 9 bezeichnet ist, ist in der Fig. 3 (lediglich zum Zwecke einer eindeutigen Beschreibung, und ohne daß es an dieser Stelle eine exakt festlegbare physikalische Abgrenzung gäbe) durch eine unterbrochen gezeichnete Linie hervorgehoben. Der auflagerseitige Abschnitt 11 der Radialführung 9 ist durch eine koaxial zur Lagerachse 12 ausgerichtete, axial tiefe Ringnut 13 und eine flachere Ringkehle 15 von einem die Auflast und axiale Druckspannungen aufnehmenden Tragringfederabschnitt 14 des Elastomerfederkörpers 6 konfigurativ abgekoppelt und mit diesem Tragringfederabschnitt 14 nur über einen vergleichsweise schwachen Ringsteg 16 verbunden.

Zudem ist der auflagerseitige Abschnitt 11 der Radialführung 9 in seiner axialen Höhe in der in den Figuren 3 bis 5 dargestellten Weise vorzugsweise wesentlich kürzer dimensioniert als der Tragringfederabschnitt 14, und zwar vorzugsweise um so viel kürzer, daß die auflagerseitige kreisringförmige Stirnseite 17 dieses Abschnitts 11 ein auf der Stirnseite des Tragringfederabschnitts 14 aufliegendes Auflageranschlußelement 18, 18' (Fig. 4 und 5) auch unter Betriebslast nicht berührt.

Die Einleitung der Auflast in den Elastomerfederkörper 6 und der Aufbau der dadurch erzeugten Druckspannungen erfolgt dagegen ausschließlich in dem Teilbereich des Tragringfederabschnittes 14 über dessen stirnseitige Kreisringflächen 28,29 sowie in dem in den Figuren 3 und 4 gezeigten Ausführungsbeispiel auch über Ringflächen 30, 31 einer Ringmanschette 19. Da die Auflastaufnahme über die Ringflächen 28,29 bzw. 30,31 auf zumindest im wesentlichen gleichen Radien erfolgt, werden in den tragenden Elastomerabschnitten 14,19 des Elastomerfederkörpers 6 auch keine die Standzeit des Einknüpflagers verkürzenden Scherspannungen erzeugt.

Durch diese konfigurativ doppelte, nämlich sowohl radiale als auch axiale Abkopplung der Radialführung 9 von den Druckspannungsabschnitten des Elastomerfederkörpers 6, nämlich dem Tragringfederabschnitt 14 und der Ringmanschette 19, kann das Auftreten von Scherspannungen in der Lagerfeder so weit unterdrückt werden, daß das Einknüpflager gemäß der Erfindung bei Verwendung jeweils gleicher Elastomerwerkstoffe im Vergleich zu dem in den Figuren 1 und 2 dargestellten Einknüpflager nach dem Stand der Technik eine um einen Faktor im Bereich von 10 bis 20 verlängerte Standzeit unter dynamischer Dauerbelastung (auf einem Prüfpulser) aufweist.

Zudem zeigt das Einknüpflager der Erfindung gegenüber dem Einknüpflager gemäß dem Stand der Technik eine deutlich bessere Quersteifigkeit, d.h. eine verbesserte radiale Federführung.

In der aus Fig. 3 ersichtlichen Weise ist bei dem dort gezeigten Ausführungsbeispiel der Erfindung der Elastomerfederkörper 6 einknüpfseitig mit einer schirmartigen Ringmanschette 19 in Form eines sich zur Auflagerseite hin öffnenden Kegelstumpfmantels ausgestattet. Diese Ringmanschette 19 erfüllt im einzelnen drei Aufgaben: (i) Sie dient der Zentrierung und Führung des Elastomerfederkörpers beim Einknüpfen in die Einknüpföffnung im Einknüpfflansch 10; (ii) sie dient der Fixierung und der Stabilisierung des Elastomerfederkörpers 6 in der Einknüpföffnung durch ein einspannendes Umgreifen des Einknüpfflansches 10; und (iii) sie dient bei Einknüpflagern der in den Figuren 4 und 5 gezeigten Art als ein zusätzlicher, axial eingeleitete Druckspannungen aufnehmender Tragringfederabschnitt, wenn beispielsweise am Auflastanschlußelement 18,18' Zugkräfte angreifen, wobei solche Zugkräfte beispielsweise durch ein dynamisches Rückschwingen eines Antriebsaggregats eines Kraftfahrzeugs auftreten können, wenn das Einknüpflager als sogenanntes "Motorlager" eingesetzt wird.

Um eine gute Zentrierbarkeit und Einknüpfbarkeit des Elastomerfederkörpers zu ermöglichen, liegt der auf die Radialebene des Lagers bezogene Öffnungswinkel α der äußeren Kegelmantelfläche der Ringmanschette 19 im spannungsfreien Zustand (Fig. 1) vorzugsweise im Bereich von ungefähr 10° bis 25°. Gleichzeitig liegt der ebenfalls auf die Radialebene des Lagers bezogene Öffnungswinkel β der inneren Kegelmantelfläche der Ringmanschette 19 im spannungsfreien Zustand (Fig. 1) vorzugsweise im Bereich von ungefähr 25° bis 40°, und zwar mit der Maßgabe, daß der Öffnungswinkel α vorzugsweise stets kleiner, insbesondere um mindestens 5° kleiner als der Öffnungswinkel β ist. Dies bedeutet, daß die Ringmanschette 19 an ihrem Außenrand dicker als an ihrem Innenrand ist.

Durch diese Verstärkung des Außenrandes der Ringmanschette 19 werden eine Reihe von Vorteilen erzielt. Zum einen wird das Einknüpfverhalten des Elastomerfederkörpers 6 verbessert, da sich die Ringmanschette 19 beim Einknüpfen nicht in sich unvorhersehbar verformt und dehnt, sondern zuverlässig an ihrer schwächeren Innen-Ringkante einschlägt. Zum anderen wird durch die Aufweitung der Ringmanschette 19 beim Umfassen des Einknüpfflansches eine radial auswärts gerichtete Zugkomponente erzeugt, die die Fixierung des Elastomerfederkörpers im Einknüpfflansch verbessert. Zum dritten schließlich erfolgt bei Einleitung von Zugkräften am Auflageranschluß ein Einleiten der Kompressionskräfte in die Ringmanschette 19 fast ausschließlich (je nach Abstimmung) im peripheren Randbereich der Ringmanschette 19, wodurch die Abkopplung der Radialführung 9 von den axial ausgerichteten Druckspannungen in der Ringmanschette 19 schubspannungsfrei bewirkt wird.

Einer Erleichterung der Einknüpfbarkeit des Elastomerfederkörpers dient auch eine im Verlauf der kreisförmigen Trennlinie zwischen der inneren Kegelmantelfläche der Ringmanschette 19 und der außenliegenden Zylinderfläche 20 der Radialführung 9 des Elastomerfederkörpers ausgebildete Ringkehle 21, die wie die Ringkehle 15 dem Spannungsabbau an den ringkantennahen Verformungsbereichen dient.

Durch die relativ stark gegliederte und zerklüftete Struktur des Elastomerfederkörpers 6 des Einknüpflagers wird gleichsam als "Nebendprodukt" ein witerer bedeutsamer technischer Vorteil erzielt, nämlich eine spürbare Verkürzung der erforderlichen Vulkanisationszeit, was unmittelbar eine Senkung der Herstellungskosten für den Elastomerfederkörper zur Folge hat.

Die im Elastomerfederkörper konfigurativ angelegten Funktionalitäten des Einknüpflagers können im zusammengebauten Zustand des Einknüpflagers durch ein Zusammenwirken mit entsprechenden Gestaltungen der Stahlteile des Einknüpflagers sowohl verstärkt als auch feinabgestimmt werden.

So ist bei dem in Fig. 4 gezeigten Ausführungsbeispiel der Innenrandbereich des Einknüpfflansches 10 als flache ringförmige Vertiefung 22 mit einer geringfügig aufstehenden Randkante ausgebildet, deren Radius gleich oder geringfügig kleiner als der Außendurchmesser des auf dieser Vertiefung aufliegenden Fußbereiches des Tragringfederabschnittes 14 ist. Dadurch kann insbesondere bei dynamischer Wechsellast eine Bombierungsrollbewegung des Fußbereiches des Tragringfederabschnittes 14 auf der Einknüpfflanschoberfläche unterbunden werden, die ein Einreißen des Elastomerfederkörpers im Rollbereich auslösen kann. Die Vertiefung 22 kann zu diesem Zweck durch Tiefziehen oder durch Ausdrehen oder in anderer geeigneter Weise hergestellt werden. Auch können solche ringförmigen Ausnehmungen zur Unterdrückung von Rollbewegungen im Elastomer selbstverständlich an beliebigen anderen Auflagen des Einknüpflagers vorgesehen sein.

In ähnlicher Weise, jedoch zu anderem Zweck, kann auch in dem auflagerseitigen Innenrandbereich einer Zugumlenkscheibe 23 eine ringförmige Vertiefung 24 vorgesehen sein. Eine solche Vertiefung ist in der Fig. 4 durch eine unterbrochen gezeichnete Linie angedeutet und dient einer axialen Verformung der Radialführung 9 des Elastomerfederkörpers als Ausweichkammer, so daß selbst in diesem Bereich der Anlenkung der Biegeverformung der Ringmanschette 19 keine nennenswerten Schubspannungen auftreten können.

Weniger der Unterbindung von Rollbewegungen als vielmehr der Steuerung, Beeinflussung und Abstimmung der Bombierung des Elastomerfederkörpers insgesamt bei höheren Drucklasten dienen die in der Fig. 5 gezeigten längeren, schürzenartige ausgebildeten Randzargen 25,26 der Auflageranschlußelemente 18',23'. Dabei kann der Innendurchmesser einer solchen Zarge gleich oder geringfügig kleiner als der Außendurchmesser des Tragringfederabschnittes in diesem Bereich sein, wie dies in Fig. 5 für die Zarge 25 gezeigt ist, oder aber kann auch größer als der Außendurchmesser des Tragringfederabschnittes ein, wie dies in Fig. 5 für die Zarge 26 gezeigt ist. Während die Randzarge 25 von Anbeginn einer Drucklastbeaufschlagung des Einknüpflagers an eine versteifende Progression der Federkennlinie des Lagers bewirkt, läßt die Randzarge 26 zunächst eine unbeeinflußte Kompression und Bombierung des Elastomerfederkörpers zu und führt erst oberhalb eines Grenzwertes der Kompressionslast zu einer Kennlinienprogression.

Auf diese Art kann das Einknüpflager auf ein vorgegebenes Anwendungsprofil in weiten Grenzen abgestimmt werden, ohne daß Kompromisse bei den vorstehend erläuterten Grundfunktionen des Elastomerfederkörpers und des Einknüpflagers insgesamt eingegangen werden müssen. Auf die effektiven mittleren Radien der Kraftübertragungsflächen 28',29',30' und 31' werden durch solche Abstimmung nicht beeinflußt.

## Patentansprüche

1. Einknüpflager mit einem einteiligen rotationssymmetrischen Elastomerfederelement (6), einem ersten Anschlusselement (10), nämlich einem Anschlussflansch mit einer Einknüpföffnung, in die das Elastomerfederelement eingeknüpft und auf dessen Randflächenbereich es abgestützt ist, sowie mit einem zweiten, in der Regel scheibenförmigen Anschlusselement (18,18',23,23'), das am Elastomerfederelement, zumeist zu beiden Seiten des Anschlussflansches, angeschlossen und in diesem Falle mit einer Hülse (8) und in dieser mit einem Schraubbolzen (12) durchsetzt und mit aussenliegenden Schraubmuttern fixiert ist,
**gekennzeichnet durch**
in Kraftflussrichtung koaxial zueinander ausgerichtete und auf gleichen oder nahezu gleichen Radien liegende radiale Kraftübertragungsflächen (28', 29'; 30', 31') zwischen den jeweils zusammenwirkenden Flächenbereichen der Anschlusselemente (18', 10, 23') und des Elastomerfederelementes (6; 28, 29, 30, 31), so dass vom Auflageranschluss (18, 23; 18', 23') und vom Widerlageranschluss (10) axial in das Elastomerfederelement (6) eingeleitete Kräfte, von Verformungsbombierungen abgesehen, praktisch frei von Schubspannungskomponenten und frei von Scherspannungskomponenten zu einem zylinderringartig verteilten Druckspannungsverlauf im Elastomerfederelement (6-14, 6-19) führen.

2. Einknüpflager nach Anspruch 1,
**gekennzeichnet durch**
mindestens eine den Druckspannungszylinderring koaxial umlaufende Ringnut (13) im Elastomerfederelement (6).

3. Einknüpflager nach einem der Ansprüche 1 oder 2,
**gekennzeichnet durch**
eine axiale Verkürzung des dem Druckspannungszylinderring gegenüberliegenden Ringschenkels (11) der Ringnut (13).

4. Einknüpflager nach einem der Ansprüche 1 bis 3,
**gekennzeichnet durch**
eine einknüpfseitig ausgebildete schirmförmige Ringmanschette (19) des Elastomerfederelementes (6) in Form eines sich zum Auflageranschluss (18) hin öffnenden kegelstumpfartigen Kegelmantels.

5. Einknüpflager nach Anspruch 4,
**gekennzeichnet durch**
eine kegelmantelförmige Ringmanschette (19), deren äusserer, auf die Radialebene bezogener Kegelöffnungswinkel α kleiner als der ebenfalls auf die Radialebene bezogene innere Kegelöffnungswinkel β ist (Fig. 3).

6. Einknüpflager nach einem der Ansprüche 4 oder 5,
**gekennzeichnet durch**
eine Ringkehle (15, 21) oder eine axial rückspringende Ringnut in der kreisförmigen Schnittlinie zwischen der inneren Mantelfläche der Ringmanschette (19) und einer den Widerlageranschluss (10) aufnehmenden inneren Zylinderfläche (20) des Elastomerfederelementes (6).

7. Einknüpflager nach einem der Ansprüche 4 bis 6,
**gekennzeichnet durch**
eine in der Radialebene liegende kreisringförmige Ringfläche (27), die die äussere Mantelfläche (31; 31') der Ringmanschette (19) und die zylindrische Innenmantelfläche einer zentralen Bohrung (7) des Elastomerfederelementes (6) auf der einknüpfseitigen Stirnseite des Elastomerfederelementes miteinander verbindet.

8. Einknüpflager nach einem der Ansprüche 1 bis 7,
**gekennzeichnet durch**
eine axiale Höhe der Zylinderwand (20) des die zylindrische Innenwand der Einknüpföffnung des Anschlussflansches (10) aufnehmenden ringförmigen Einschnittes des Elastomerfederefementes (6), die gleich oder geringfügig kleiner als die axiale Höhe dieser zylindrischen Innenwand der Einknüpföffnung des Anschlussflansches (10) ist.

9. Einknüpflager nach einem der Ansprüche 1 bis 8,
**gekennzeichnet durch**
eine sich zum Federelement hin napfförmig öffnende Gestaltung (18', 25; 23', 26) zumindest eines der gegebenenfalls zwei einander gegenüberliegenden stirnseitigen Anschlusselemente (18, 24).

10. Einknüpflager nach Anspruch 9,
**gekennzeichnet durch**
zumindest ein stirnseitiges sich zum Federelement (6) hin napfförmig öffnendes Anschlusselement (23', 26), dessen axial innenliegender Bodendurchmesser im statisch belasteten Zustand des Lagers unter Einbaubedingungen grösser als der Aussendurchmesser der auf dem Boden dieses Anschlusselementes (23') abgestützten Fläche (31') des Elastomerfederelementes (6) ist.

11. Einknüpflager nach einem der Ansprüche 1 bis 10,
**gekennzeichnet durch**
eine die Einknüpföffnung konzentrisch umgebende napfförmige Vertiefung (22), deren Bodendurchmesser im statisch belasteten Zustand des Lagers unter Einbaubedingungen gleich oder nur wenig kleiner als der Aussendurchmesser der auf dem Boden dieser napfförmigen Vertiefung (22) abgestützten Fläche (29; 29') des Elastomerfederelementes (6) ist.

## Claims

1. Pop-in-type bearing comprising a rotationally symmetric one-piece elastomer spring element, a first connector element, namely a connection fitting flange having a pop-in aperture into which the elastomer spring element is press-fitted resting on the edge surface zone of this flange, and further comprising a second and generally disc-shaped connector element connected to the elastomer spring, generally to both sides of the connection fitting flange, and in such a case being traversed by a sleeve fitting a screw-bolt secured with external nuts fastening the elastomer spring element,
**characterized by**
radially extending force-transmitting surfaces (28', 29'; 30', 31') adjusted coaxially in the direction of force transmission and having equal or nearly equal radii as to the particular co-operating surface areas of the connector elements (18', 10; 23') on the one hand and of the elastomer spring element (6; 28, 29, 30, 31) on the other hand, whereby forces axially introduced from the support connection fitting (18, 23; 18', 23') and from the load connection fitting (10) into the elastomer spring element (6) are practically free of components of thrust stresses and free of components of share stresses, neglecting deformation curving, resulting in a spacial compressive stress distribution of annular cylindrical shape in the elastomer spring element (6-14, 6-19).

2. Pop-in-type bearing as claimed in claim 1,
**characterized by**
at least one annular channel (13) in the elastomer spring element (6), coaxially peripheral to the annular cylinder of compression stress.

3. Pop-in-type bearing as claimed in either of claims 1 or 2,
**characterized by**
an annular leg (11) of the annular channel (13) opposite the annular cylinder of compressive stresses being shortened.

4. Pop-in-type bearing as claimed in one of claims 1 through 3,
**characterized by**
an umbrella-like annular lip (19) of the elastomer spring (6) situated at the pop-in-side and in the form of frustoconical surface opening toward the load connection fitting (18).

5. Pop-in-type bearing as claimed in claim 4,
**characterized by**
an annular lip (19) of frustoconical surface of which the outer conical angle α relative to the radial plane is smaller than the inner conical angle β, also relative to the radial plane (fig. 3).

6. Pop-in-type bearing as claimed in either of claims 4 or 5,
**characterized by**
an annular notch (15, 21) or an channel standing back in axial direction in the circular intersection of the inside surface of the annular lip (19) and an inner cylindrical surface (20) of the elastomer spring (6) receiving the support connection fitting (10).

7. Pop-in-type bearing as claimed in one of claims 4 through 6,
**characterized by**
a circular annular surface (27) in the radial plane and connecting the outer surface (31, 31') of the annular lip (19) to the cylindrical inner surface of a central borehole (7) of the elastomer spring element (6) at the pop-in-side end face of the elastomer spring element.

8. Pop-in-type bearing as claimed in one of claims 1 through 7,
**characterized by**
an axial height of the cylinder wall (20), of the annual notch of the elastomer spring element (6) receiving the cylindrical inner wall of the pop-in aperture of the connection fitting flange (10), equal or slightly less than the axial height of this cylindrical inner wall of the pop-in aperture of the connection fitting flange (10).

9. Pop-in-type bearing as claimed in one of claims 1 through 8,
**characterized by**
a bowl-shaped structure (18', 25; 23', 26), opening toward the spring element, of at least one of the possibly two mutually opposite end face connection fittings (18, 24).

10. Pop-in-type bearing as claimed in claim 9,
**characterized by**
at least one connection fitting (23', 26) opening in a bowl-shaped manner toward the spring element (6) of which the axially inner base diameter when the support is under load during assembly is larger than the outer diameter of the surface (31') of the elastomer spring element (6) resting on the base of this connection fitting (23').

11. Pop-in-type bearing as claimed in one of claims 1 through 10,
**characterized by**
a bowl-shaped recess (22) concentrically enclosing the pop-in aperture, the base diameter of this recess when statically loaded during assembly being equal or only slightly less than the outside diameter of the surface (29; 29') of the elastomer spring (6) where said surface (29, 29') rests on said bowl-shaped recess (22).

## Revendications

1. Support d'attache à resserrement, comportant un élément élastique en élastomère (6) à symétrie de rotation et d'une seule pièce, un premier élément de raccordement (10), à savoir une bride de raccordement avec une ouverture de resserrement, dans laquelle l'élément élastique en élastomère est resserré et sur la zone de la surface de bord de laquelle il s'appuie, ainsi qu'un second élément de raccordement, (18, 18', 23, 23') en règle générale en forme de disque, qui est raccordé à l'élément élastique en élastomère, la plupart du temps des deux côtés de la bride de raccordement et qui est, dans ce cas, traversé par une douille (8), avec à l'intérieur un boulon fileté (12) avec fixation par des écrous vissés, situés à l'extérieur,
**caractérisé par**
des surfaces de transmission de force (28', 29' ; 30', 31'), qui sont dirigées mutuellement de manière coaxiale dans le sens des forces et qui sont situées radialement sur des rayons égaux ou presque égaux, entre les zones de surfaces, chaque fois concourantes, des éléments de raccordement (18', 10, 23') et de l'élément élastique en élastomère (6 ; 28, 29, 30, 31), si bien que des forces, introduites axialement dans l'élément élastique en élastomère (6) à partir du raccordement d'appui (18, 23 ; 18', 23') et à partir du raccordement de butée (10) aboutissent, mis à part des bombements de déformation, d'une manière pratiquement exempte de composantes de contrainte de cisaillement et exempte de composantes de tension de cisaillement, à une répartition, du type anneau cylindrique, des tensions de compression dans l'élément élastique en élastomère (6-14, 6-19).

2. Support d'attache à resserrement selon la revendication 1,
**caractérisé par** au moins une rainure annulaire (13) entourant de manière coaxiale l'anneau cylindrique de tension de compression dans l'élément élastique en élastomère (6).

3. Support d'attache à resserrement selon l'une des revendications 1 ou 2,
**caractérisé par** un raccourcissement axial du côté (11) de la rainure annulaire (13), qui est en regard de l'anneau cylindrique subissant la contrainte de compression.

4. Support d'attache à resserrement selon l'une des revendications 1 à 3,
**caractérisé par** une manchette annulaire (19) en forme d'écran du côté resserrement de l'élément élastique en élastomère (6), sous la forme d'une surface latérale de cône du type cône tronqué allant en s'ouvrant en direction du raccordement d'appui (18).

5. Support d'attache à resserrement selon la revendication 4,
**caractérisé par** une manchette annulaire (19) en forme de surface latérale de cône dont l'angle extérieur d'ouverture de cône α est, par rapport au plan radial, plus petit que l'angle intérieur d'ouverture de cône β, également par rapport au plan radial (figure 3).

6. Support d'attache à resserrement selon l'une des revendications 4 ou 5,
**caractérisé par** une gorge annulaire (15, 21) ou une rainure annulaire axialement en retrait dans la ligne d'intersection de forme circulaire entre la surface latérale intérieure de la manchette annulaire (19) et une surface cylindrique intérieure (20), recevant le raccordement de butée (10), de l'élément élastique en élastomère (6).

7. Support d'attache à resserrement selon l'une des revendications 4 à 6,
**caractérisé par** une surface annulaire (27), en forme de couronne circulaire et située dans le plan radial, qui relie l'une à l'autre la surface latérale extérieure (31 ; 31') de la manchette annulaire (19) et la surface latérale intérieure cylindrique d'un alésage central (7) de l'élément élastique en élastomère (6), sur le côté frontal du côté resserrement de l'élément élastique en élastomère.

8. Support d'attache à resserrement selon l'une des revendications 1 à 7,
**caractérisé par** une hauteur axiale de la paroi cylindrique (20) de l'entaille de l'élément élastique en élastomère (6), de forme annulaire et recevant la paroi intérieure cylindrique de l'ouverture de resserrement de la bride de raccordement (10), qui est égale ou légèrement inférieure à la hauteur axiale de cette paroi intérieure cylindrique de l'ouverture de resserrement de la bride de raccordement (10).

9. Support d'attache à resserrement selon l'une des revendications 1 à 8,
**caractérisé par** une conformation (18', 25 ; 23', 26), allant en s'ouvrant en forme de cuvette en direction de l'élément élastique, d'au moins l'un des éléments de raccordement (18, 24), le cas échéant opposés l'un à l'autre du côté frontal.

10. Support d'attache à resserrement selon la revendication 9,
**caractérisé par** au moins un élément de raccordement (23', 26) s'ouvrant en forme de cuvette du côté frontal en direction de l'élément élastique (6), et dont le diamètre de fond, axialement à l'intérieur, est plus grand, à l'état de sollicitation statique du support dans les conditions de montage, que le diamètre extérieur de la surface (31') de l'élément élastique en élastomère (6), prenant appui sur le fond de cet élément de raccordement (23').

11. Support d'attache à resserrement selon l'une des revendications 1 à 10,
**caractérisé par** un évidement (22), en forme de cuvette entourant de manière concentrique l'ouverture de resserrement, et dont le diamètre de fond est, à l'état de sollicitation statique du support dans les conditions de montage, égal ou uniquement très peu inférieur au diamètre extérieur de la surface (29 ; 29') de l'élément élastique en élastomère (6), prenant appui sur le fond de cet évidement (22) en forme de cuvette.
